# EUROPEAN PATENT SPECIFICATION

(11) **EP 2 894 116 B1**
(45) Date of publication and mention of the grant of the patent: **21.08.2019**
(21) Application number: 14151193.1
(22) Date of filing: 14.01.2014
(51) Int. Cl.: B65G 21/10, B65G 21/14, B65G 23/44

(54) **A folding conveyor assembly**
Faltbare Förderanlage
Ensemble d' un transporteur pliable

(43) Date of publication of application: 15.07.2015
(73) Proprietor: Portafill International Limited, Omagh Tyrone BT79 9JR (GB)
(72) Inventor: Rafferty, Malachy James, Omagh, Tyrone BT79 PJR (GB)
(74) Representative: Schütte, Gearoid

(56) References cited:
- EP-A1- 0 731 040
- FR-A1- 2 956 103
- GB-A- 2 108 918
- US-A- 5 086 911
- US-A1- 2007 267 273

## Description

### Introduction

This invention relates to folding conveyors and in particular to folding conveyors used on mobile aggregate material handling equipment.

Folding conveyors are commonly provided on mobile aggregate material handling equipment and the like such as stockpiling conveyors, rock crushers and grading screens for example. It is very useful to be able to fold the conveyor on a mobile chassis for example for transport. Typically such conveyors comprise two or more conveyor sections which are hinged together, or in some cases a telescopic arrangement is provided. An endless conveyor belt is mounted between rotating drums on two of the sections. The conveyor belt needs to be tensioned to allow it to convey material properly. With hingedly connected conveyor sections belt tension needs to be released prior to folding to enable relative hinging of the conveyor sections without damaging the conveyor belt. This is typically done by manually loosening the belt. After re-deployment of the conveyor sections into the working position, the conveyor belt is again manually tightened to the required operating tension. This is somewhat inconvenient and time-consuming and the correct tension must be set each time before the belt will function properly.

The present invention is directed towards overcoming this problem.

EP 0 731 040 A1 and FR 2 956 103 A1 disclose conveyors having a number of mutually pivoting conveyor parts supporting an endless conveyor belt. The conveyor parts can be bent relative to each other into a number of operating positions. The angle between two adjacent conveyor parts can be varied whilst maintaining the conveyor belt at a desired tension.

EP 0 731 040 A1, mentioned above, discloses the features of the preamble of claim 1.

In US 2007/0267273 A1 there is disclosed a foldable conveyor with a tensioning device which can be fitted thereto in order to maintain a tension in a belt of the conveyor during a folding or unfolding operation. Another folding conveyor is disclosed in US 5,086,911 A, having two folding parts supporting a conveyor belt.

### Summary of the Invention

According to the invention there is provided a folding conveyor assembly having the features defined in claim 1, including a conveyor having at least two hingedly interconnected conveyor parts which are movable relative to each other between a folded stored position and an extended in-use position, an endless conveyor belt mounted between two drums on different conveyor parts and tensioned between said two drums when the conveyor parts are in the extended in-use position, the conveyor belt being tensioned between said two drums by a belt tensioning mechanism which is operable to reduce belt tension in response to folding of the conveyor parts from the extended in-use position towards the folded stored position, and wherein the belt tensioning mechanism includes one of the drums forming a sliding drum which is longitudinally slidable on a frame of the conveyor part between an inner tension relieving position and an outer tension applying position, and a slide rod extends inwardly from each end of the sliding drum to a cam on the adjacent conveyor part such that said cam urges the slide rod outwardly to retain the sliding drum in the outer position when the conveyor is in the extended position and allows the slide rod to move inwardly as the conveyor parts move from the extended position to the folded position.

In another embodiment, the slide rod and cam are spaced-apart from a pivot axis of a hinge joint connecting the adjacent conveyor parts on an opening side of the hinge joint.

In a further embodiment, the cam comprises a cam plate and a roller at an inner end of the slide rod is engagable with the cam plate.

In another embodiment, the cam plate extends radially outwardly from the pivot axis.

In another embodiment, the cam plate has a curved outer end.

In another embodiment, the length of the slide rod is adjustable.

In another embodiment, the slide rod incorporates a turnbuckle for length adjustment.

In another embodiment, the conveyor has three hingedly interconnected parts comprising a head section, an intermediate section and a tail section, the intermediate section having the head section and the tail section hingedly connected at opposite ends thereof.

In another embodiment, the conveyor sections are foldable in a zig-zag formation.

In another embodiment, the intermediate section is hingedly connected to the tail section for folding over the tail section and the head section is hingedly connected to the intermediate section for folding towards an underside of the intermediate section.

In another embodiment, the head section is foldable against the underside of the intermediate section in the folded stored position.

In a further embodiment, a folding ram is mounted between the tail section and the intermediate section for folding the intermediate section on the tail section and a folding linkage extends between the tail section and the intermediate section and the head section for folding the head section on the intermediate section in response to operation of the folding ram.

In another embodiment, the folding linkage comprises a mounting bracket on the tail section extending outwardly from a pivot axis of a hinge joint connecting the tail section and the intermediate section on an opening side of the hinge joint, an actuating rod having an inner end pivotally attached to the mounting bracket and an outer end pivotally connected to a first link arm having an outer end connected to the actuating rod and an inner end pivotally connected to the intermediate section at one side of the hinge joint between the intermediate section and the head section, a second link arm having an outer end pivotally connected to the first link arm intermediate the inner end and the outer end of the first link arm and having an inner end pivotally connected to the head section of the conveyor at the other side of the hinge joint between the intermediate section and the head section.

### Brief Description of the Drawings

The invention will be more clearly understood by the following description of some embodiments thereof, given by way of example only, with reference to the accompanying drawings, in which:
Fig. 1 is a perspective view of a folding conveyor assembly according to the invention;
Fig. 2 is another perspective view of the folding conveyor assembly shown in a partially folded position;
Fig. 3 is an elevational view of the folding conveyor assembly;
Fig. 4 is another elevational view of the folding conveyor assembly shown in a partially folded position;
Fig. 5 is a detail elevational view showing a head section of the folding conveyor assembly in a partially folded position;
Fig. 6 is a detail perspective view showing the head section in a partially folded position;
Fig. 7 is a perspective view showing the folding conveyor assembly in a fully folded stored position; and
Fig. 8 is an elevational view showing the folding conveyor assembly in the fully folded stored position.

### Detailed Description of Preferred Embodiments

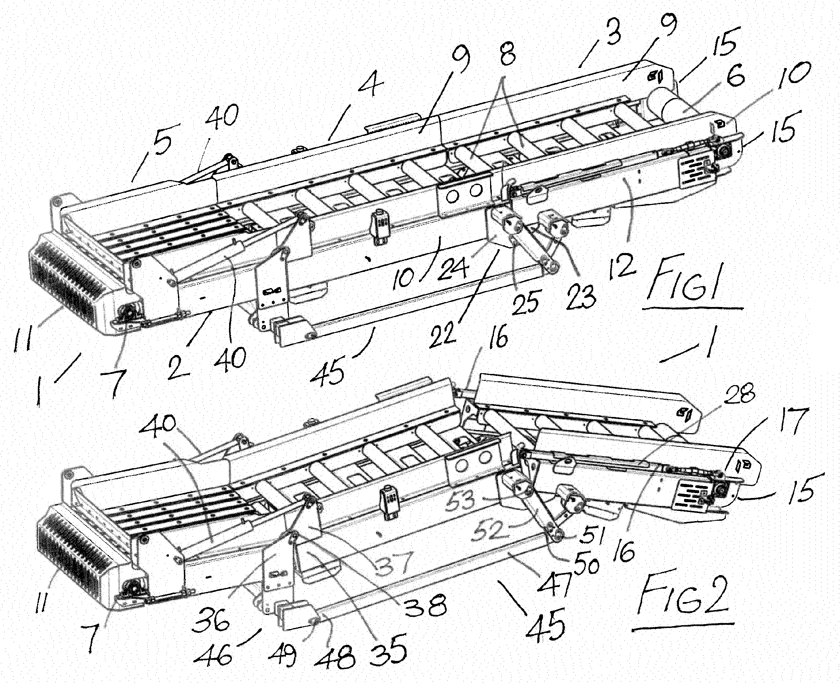

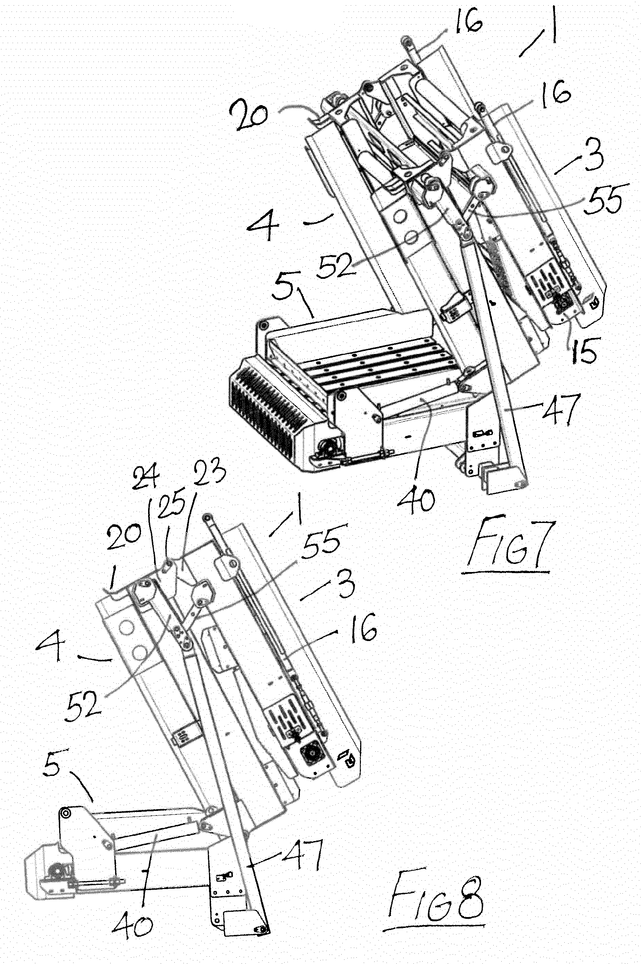

Referring to the drawings, there is illustrated a folding conveyor assembly according to the invention indicated generally by the reference numeral 1. The folding conveyor assembly 1 comprises a conveyor 2 having three hingedly interconnected conveyor parts, namely a head section 3, an intermediate section 4 and a tail section 5 which are movable relative to each other between an extended in-use position in which the conveyor sections 3, 4, 5 are in longitudinal alignment as shown in Fig. 1 and a folded stored position as shown in Figs. 7 and 8 in which the conveyor sections 3, 4, 5 are arranged in a zig-zag formation.

An endless conveyor belt (not shown) is mounted between a sliding drum 6 at an outer end of the head section 3 and an associated fixed drum 7 mounted within a casing 11 at an outer end of the tail section 5. A number of spaced-apart rollers 8 are rotatably mounted between side rails 9, 10 of the conveyor 2 for supporting the conveyor belt between the rotatable drums 6, 7. The conveyor belt has been omitted from the drawings so that the structure of the conveyor 2 can be more readily appreciated.

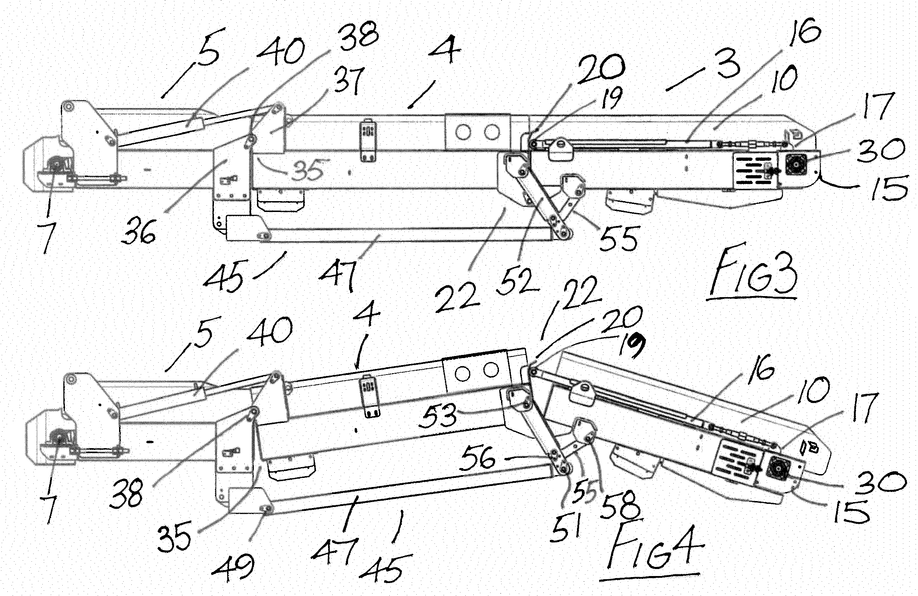

The conveyor belt is tensioned between the two drums 6, 7 by a belt tensioning mechanism indicated generally by the reference numeral 12 which is operable to push the sliding drum 6 outwardly when the conveyor 2 is in the extended in-use position shown in Fig. 1, applying tension to the conveyor belt. Upon folding the conveyor sections 3, 4, 5, the belt tensioning mechanism 12 allows the sliding drum 6 to move inwardly to reduce belt tension. To facilitate this the sliding drum 6 is mounted between slide plates 15 which are slidably mounted on the side rails 9, 10 of the head section 3 at an outer free end of the head section 3. Slide rods 16 extend inwardly from each end of the sliding drum 6, being connected to the slide plates 15 by mounting brackets 17. An inner end 18 of each slide rod 16 has a roller 19 rotatably mounted thereon which engages an associated cam plate 20 on the intermediate section 4 such that the cam plate 20 urges the slide rod 16 outwardly to retain the sliding drum 6 in the outer position when the conveyor sections 3, 4, 5 are in the extended aligned position, as shown in Fig. 1 and allows the slide rod 16 to move inwardly as the head section 3 and intermediate section 4 move from the extended position to the folded position as shown in Fig. 4.

The head section 3 and intermediate section 4 are interconnected by a hinge joint 22 comprising hinge plates 23, 24 at each side of the head section 3 and intermediate section 4 connected by pivot pins 25. Thus, the head section 3 and intermediate section 4 can fold together with an underside of each section 3, 4 abutting or adjacent to each other as shown in Fig. 7.

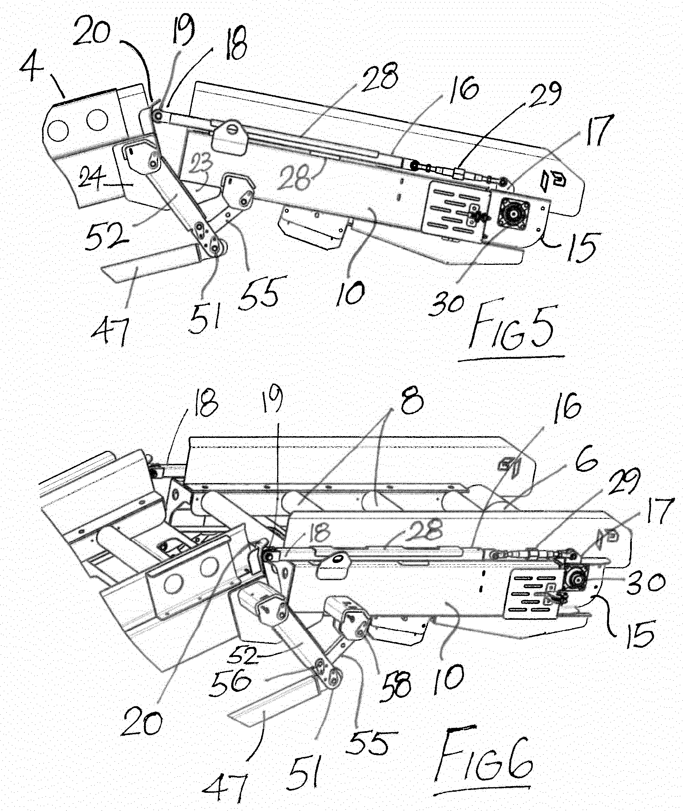

It will be noted that the slide rod 16 and the cam plate 20 are spaced-apart from a pivot axis through the pivot pins 25 of the hinge joint 22 on an opening side of the hinge joint 22. Thus, as the head section 3 and intermediate section 4 fold away from the extended in-use position shown in Fig. 1, the opening of the hinge joint 22 allows the slide rods 16 to move inwardly as shown in Fig. 5 due to tension in the conveyor belt, thus relieving tension in the conveyor belt during the folding sequence.

Guides 28 on the side rails 9, 10 constrain the slide rod 16 to move in a longitudinal direction. A bottle screw or turnbuckle 29 at an outer end of the slide rod 16 allows length adjustment of the slide rod 16 for adjusting the tension in the conveyor belt when the conveyor sections 3, 4, 5 are in the extended in-use position. The sliding drum 6 is rotatably mounted in bearings 30 mounted on the slide plates 15.

The tail section 5 and intermediate section 4 are interconnected by a hinge joint 35 comprising hinge brackets 36, 37 on the tail section 5 and intermediate section 4 connected by a pivot pin 38. Folding rams 40 are mounted between the tail section 5 and the intermediate section 4 and are operable to fold the intermediate section 4 upwardly over the tail section 5 as shown in Figs. 7 and 8.

A folding linkage indicated generally by the reference numeral 45 extends between the tail section 5 and the intermediate section 4 and the head section 3 for folding the head section 3 on the intermediate section 4 in response to operation of the folding rams 40. The folding linkage 45 comprises a mounting bracket 46 on the tail section 5, in this case attached to the bracket 36. The mounting bracket 46 extends outwardly from the pivot axis 38 of the hinge joint 35 on an opening side of the hinge joint 35. An actuating rod 47 has an inner end 48 attached by a pivot pin 49 to the mounting bracket 46. An outer end 50 of the actuating rod 47 is connected by a pivot pin 51 to a first link arm 52, an inner end of which is attached by a pivot connector 53 to the intermediate section 4 at one side of the hinge joint 22 between the intermediate section 4 and the head section 3. A second link arm 55 has an outer end pivotally connected by pivot 56 to the first link arm 52 intermediate the inner end and outer end of the first link arm 52 and preferably adjacent the pivot 51. An inner end of the second link arm 55 is attached by a pivot connector 58 to the head section 3 of the conveyor at the other side of the hinge joint 22 between the intermediate section 4 and the head section 3.

In use, when the conveyor 2 is in the extended in-use position with the conveyor sections 3, 4, 5 longitudinally aligned as shown in Fig. 1, the slide rod 16 under action of the cam plate 20 urges the sliding drum 6 outwardly to apply a desired tension to the conveyor belt. To fold the conveyor 2, the folding rams 40 are operated. This pulls the intermediate section 4 upwardly over the tail section 5. As the intermediate section 4 moves relative to the tail section 5, the folding linkage 45 causes the head section 3 to pivot in the opposite direction on the intermediate section 4. As the hinge joint 22 opens, as shown in Fig. 4, this allows the slide rod 16 to move inwardly with tension in the conveyor belt sliding the sliding drum 6 inwardly as an inner end of the slide rod 16 rolls up the cam plate 20. The head section 3 continues to fold on the intermediate section 4 until an underside of the head section 3 is adjacent an underside of the intermediate section 4 as shown in Fig. 8. As the conveyor sections 3, 4, 5 are subsequently folded back into the extended in-use position the roller 19 on the end of the slide rod 16 will engage and roll down the cam plate 20 which will urge the slide rod 16 and hence the sliding drum 6 outwardly to tension the conveyor belt to the required operating tension.

It will be appreciated that the design of the folding conveyor assembly according to the invention allows the maximum desirable tension to be applied to the conveyor belt in the fully extended operating position whilst at the same time, the conveyor can automatically fold into the stored position without any need to manually loosen the conveyor belt prior to folding the conveyor sections. Also, when the conveyor is again folded into the extended operating position, the correct tension is automatically applied to the conveyor belt.

The invention is not limited to the embodiments hereinbefore described which may be varied in both construction and detail within the scope of the appended claims.

## Claims

1. A folding conveyor assembly (1) including a conveyor having at least two hingedly interconnected conveyor parts (3, 4, 5) which are movable relative to each other between a folded stored position and an extended in-use position, an endless conveyor belt mounted between two drums (6, 7) on different conveyor parts (3, 5) and tensioned between said two drums (6, 7) when the conveyor parts (3, 5) are in the extended in-use position, the conveyor belt being tensioned between said two drums (6, 7) by a belt tensioning mechanism (12) which is operable to reduce belt tension in response to folding of the conveyor parts (3, 4, 5) from the extended in-use position towards the folded stored position, wherein the belt tensioning mechanism (12) includes one of the drums forming a sliding drum (6) which is longitudinally slidable on a frame (9, 10) of the conveyor part (3) between an inner position and an outer tension applying position, and a slide rod (16) extends inwardly from each end of the sliding drum (6), respectively,
**characterized in that** each slide rod (16) extends inwardly to an associated cam (20) on the adjacent conveyor part (4) such that said associated cam (20) urges the slide rod (16) outwardly to retain the sliding drum (6) in the outer tension applying position when the conveyor (1) is in the extended position and allows the slide rod (16) to move inwardly and allows the sliding drum (6) to move inwardly to its inner, tension relieving position as the conveyor parts (3, 4, 5) move from the extended position to the folded position.

2. The folding conveyor assembly (1) as claimed in claim 1 wherein the slide rod (16) and cam (20) are spaced-apart from a pivot axis of a hinge joint (22) connecting the adjacent conveyor parts (3, 4) on an opening side of the hinge joint (22).

3. The folding conveyor assembly (1) as claimed in claim 1 or claim 2 wherein the cam comprises a cam plate (20) and a roller (19) at an inner end of the slide rod (16) is engagable with the cam plate (20).

4. The folding conveyor assembly (1) as claimed in claim 3 wherein the cam plate (20) extends radially outwardly from the pivot axis.

5. The folding conveyor assembly (1) as claimed in claim 3 or claim 4 wherein the cam plate (20) has a curved outer end.

6. The folding conveyor assembly as claimed in any preceding claim wherein the length of the slide rod (16) is adjustable.

7. The folding conveyor assembly as claimed in claim 6 wherein the slide rod (16) incorporates a turnbuckle (29) for length adjustment.

8. The folding conveyor assembly (1) as claimed in any preceding claim wherein the conveyor has three hingedly interconnected parts (3, 4, 5) comprising a head section (3), an intermediate section (4) and a tail section (5), the intermediate section (4) having the head section (3) and the tail section (5) hingedly connected at opposite ends thereof.

9. The folding conveyor assembly (1) as claimed in claim 8 wherein the conveyor sections (3, 4, 5) are foldable in a zig-zag formation.

10. The folding conveyor assembly (1) as claimed in claim 8 or claim 9 wherein the intermediate section (4) is hingedly connected to the tail section (5) for folding over the tail section (5) and the head section (3) is hingedly connected to the intermediate section (4) for folding towards an underside of the intermediate section (4).

11. The folding conveyor assembly (1) as claimed in claim 10 wherein the head section (3) is foldable against the underside of the intermediate section (4) in the folded stored position.

12. The folding conveyor assembly (1) as claimed in any one of claims 8 to 11 wherein a folding ram (40) is mounted between the tail section (5) and the intermediate section (4) for folding the intermediate section (4) on the tail section (5) and a folding linkage (45) extends between the tail section (5) and the intermediate section (4) and the head section (3) for folding the head section (3) on the intermediate section (4) in response to operation of the folding ram (40).

13. The folding conveyor assembly (1) as claimed in claim 12 wherein the folding linkage (45) comprises a mounting bracket (46) on the tail section (5) extending outwardly from a pivot axis of a hinge joint (35) connecting the tail section (5) and the intermediate section (4) on an opening side of the hinge joint (35), an actuating rod (47) having an inner end (48) pivotally attached (49) to the mounting bracket (46) and an outer end (50) pivotally connected (51) to a first link arm (52) having an outer end connected to the actuating rod (47) and an inner end pivotally connected (53) to the intermediate section (4) at one side of the hinge joint (22) between the intermediate section (4) and the head section (3), a second link arm (55) having an outer end pivotally connected to the first link arm (52) intermediate the inner end and the outer end of the first link arm (52) and having an inner end pivotally connected (58) to the head section (3) of the conveyor at the other side of the hinge joint (22) between the intermediate section (4) and the head section (3).

## Patentansprüche

1. Faltbare Förderanlage (1), umfassend eine Fördereinrichtung mit mindestens zwei gelenkig miteinander verbundenen Förderteilen (3, 4, 5), die im Verhältnis zueinander zwischen einer gefalteten Verstaustellung und einer entfalteten Gebrauchsstellung beweglich sind, ein Endlosförderband, das zwischen zwei Trommeln (6, 7) an verschiedenen Förderteilen (3, 5) angebracht und zwischen den beiden Trommeln (6, 7) gespannt ist, wenn sich die Förderteile (3, 5) in der entfalteten Gebrauchsstellung befinden, wobei das Förderband zwischen den beiden Trommeln (6, 7) durch einen Bandspannmechanismus (12) gespannt wird, der dazu betreibbar ist, die Bandspannung auf ein Falten der Förderteile (3, 4, 5) aus der entfalteten Gebrauchsstellung in die gefaltete Verstaustellung hin zu verringern, wobei der Bandspannmechanismus (12) eine der Trommeln, die eine Schubtrommel (6) bildet, die längs auf einem Rahmen (9, 10) des Förderteils (3) zwischen einer Innenstellung und einer Spannung ausübenden Außenstellung verschiebbar ist, und eine Schubstange (16), die sich jeweils nach innen von jedem Ende der Schubtrommel (6) erstreckt, beinhaltet, **dadurch gekennzeichnet, dass** sich jede Schubstange (16) nach innen bis zu einem zugehörigen Nocken (20) an dem angrenzenden Förderteil (4) derart erstreckt, dass der zugehörige Nocken (20) die Schubstange (16) nach außen drückt, um die Schubtrommel (6) in der Spannung ausübenden Außenstellung zu halten, wenn sich die Fördereinrichtung (1) in der entfalteten Stellung befindet, und es der Schubstange (16) ermöglicht, sich nach innen zu bewegen, und es der Schubtrommel (6) ermöglicht, sich nach innen in ihre spannungslösende Innenstellung zu bewegen, während sich die Förderteile (3, 4, 5) aus der entfalteten Stellung in die gefaltete Stellung bewegen.

2. Faltbare Förderanlage (1) nach Anspruch 1, wobei die Schubstange (16) und der Nocken (20) von einer Schwenkachse eines Scharniergelenks (22) beabstandet sind, das die angrenzenden Förderteile (3, 4) auf einer Öffnungsseite des Scharniergelenks (22) verbindet.

3. Faltbare Förderanlage (1) nach Anspruch 1 oder Anspruch 2, wobei der Nocken eine Kurvenscheibe (20) umfasst und eine Rolle (19) an einem inneren Ende der Schubstange (16) in Eingriff mit der Kurvenscheibe (20) bringbar ist.

4. Faltbare Förderanlage (1) nach Anspruch 3, wobei sich die Kurvenscheibe (20) radial nach außen von der Schwenkachse erstreckt.

5. Faltbare Förderanlage (1) nach Anspruch 3 oder Anspruch 4, wobei die Kurvenscheibe (20) ein gekrümmtes äußeres Ende aufweist.

6. Faltbare Förderanlage nach einem vorhergehenden Anspruch, wobei die Länge der Schubstange (16) einstellbar ist.

7. Faltbare Förderanlage nach Anspruch 6, wobei die Schubstange (16) ein Spannschloss (29) zur Längeneinstellung beinhaltet.

8. Faltbare Förderanlage (1) nach einem vorhergehenden Anspruch, wobei die Fördereinrichtung drei gelenkig miteinander verbundene Teile (3, 4, 5) aufweist, umfassend einen Kopfabschnitt (3), einen Zwischenabschnitt (4) und einen Schwanzabschnitt (5), wobei mit dem Zwischenabschnitt (4) der Kopfabschnitt (3) und der Schwanzabschnitt (5) an entgegengesetzten Enden davon gelenkig verbunden sind.

9. Faltbare Förderanlage (1) nach Anspruch 8, wobei die Förderabschnitte (3, 4, 5) in einer Zickzack-Ausbildung faltbar sind.

10. Faltbare Förderanlage (1) nach Anspruch 8 oder Anspruch 9, wobei der Zwischenabschnitt (4) mit dem Schwanzabschnitt (5) zum Falten über den Schwanzabschnitt (5) gelenkig verbunden ist und der Kopfabschnitt (3) mit dem Zwischenabschnitt (4) zum Falten hin zu einer Unterseite des Zwischenabschnitts (4) gelenkig verbunden ist.

11. Faltbare Förderanlage (1) nach Anspruch 10, wobei der Kopfabschnitt (3) gegen die Unterseite des Zwischenabschnitts (4) in der gefalteten Verstauposition faltbar ist.

12. Faltbare Förderanlage (1) nach einem der Ansprüche 8 bis 11, wobei ein Faltzylinder (40) zwischen dem Schwanzabschnitt (5) und dem Zwischenabschnitt (4) zum Falten des Zwischenabschnitts (4) auf den Schwanzabschnitt (5) angebracht ist und sich ein Faltgestänge (45) zwischen dem Schwanzabschnitt (5) und dem Zwischenabschnitt (4) und dem Kopfabschnitt (3) zum Falten des Kopfabschnitts (3) auf den Zwischenabschnitt (4) auf eine Betätigung des Faltzylinders (40) hin erstreckt.

13. Faltbare Förderanlage (1) nach Anspruch 12, wobei das Faltgestänge (45) eine Halterung (46) an dem Schwanzabschnitt (5), die sich nach außen von einer Schwenkachse eines Scharniergelenks (35) erstreckt, das den Schwanzabschnitt (5) und den Zwischenabschnitt (4) auf einer Öffnungsseite des Scharniergelenks (35) verbindet, eine Betätigungsstange (47) mit einem inneren Ende (48), das an der Halterung (46) schwenkbar angebracht (49) ist, und einem äußeren Ende (50), das mit einem ersten Verbindungsarm (52) schwenkbar verbunden (51) ist, der ein äußeren Ende, das mit der Betätigungsstange (47) verbunden ist, und ein inneres Ende, das mit dem Zwischenabschnitt (4) auf einer Seite des Scharniergelenks (22) zwischen dem Zwischenabschnitt (4) und dem Kopfabschnitt (3) schwenkbar verbunden (53) ist, aufweist, einen zweiten Verbindungsarm (55) mit einem äußeren Ende, das mit dem ersten Verbindungsarm (52) zwischen dem inneren Ende und dem äußeren Ende des ersten Verbindungsarms (52) schwenkbar verbunden ist, und einem inneren Ende, das mit dem Kopfabschnitt (3) der Fördereinrichtung auf der anderen Seite des Scharniergelenks (22) zwischen dem Zwischenabschnitt (4) und dem Kopfabschnitt (3) schwenkbar verbunden (58) ist, umfasst.

## Revendications

1. Ensemble transporteur pliable (1) incluant un transporteur ayant au moins deux parties de transporteur (3, 4, 5) interconnectées de manière articulée, qui peuvent être déplacées l'une par rapport à l'autre entre une position de stockage pliée et une position d'utilisation déployée, une courroie de transporteur sans fin montée entre deux tambours (6, 7) sur des parties de transporteur différentes (3, 5) et tendue entre ces deux tambours (6, 7) lorsque les parties de transporteur (3, 5) sont dans la position d'utilisation déployée, la courroie de transporteur étant tendue entre lesdits deux tambours (6, 7) par un mécanisme de tension de courroie (12) qui peut être utilisé pour réduire la tension de la courroie en réponse au pliage des parties de transporteur (3, 4, 5) de la position d'utilisation déployée vers la position de stockage pliée, dans lequel le mécanisme de tension de courroie (12) comprend l'un des tambours formant un tambour coulissant (6) qui peut coulisser longitudinalement sur un bâti (9, 10) de la partie de transporteur (3) entre une position interne et une position d'application de tension externe, et une tige coulissante (16) s'étend vers l'intérieur à partir de chaque extrémité du tambour coulissant (6) respectivement, **caractérisé en ce que** chaque tige coulissante (16) s'étend vers l'intérieur jusqu'à une came associée (20) sur la partie adjacente de transporteur (4) de sorte que ladite came associée (20) pousse la tige coulissante (16) vers l'extérieur pour retenir le tambour coulissant (6) dans la position d'application de tension externe lorsque le transporteur (1) est dans la position déployée et permet à la tige coulissante (16) de se déplacer vers l'intérieur et au tambour coulissant (6) de se déplacer vers l'intérieur vers sa position interne de relâchement de tension lorsque les parties de transporteur (3, 4, 5) passent de la position déployée à la position pliée.

2. Ensemble transporteur pliable (1) selon la revendication 1, dans lequel la tige coulissante (16) et la came (20) sont espacées d'un axe de pivotement d'une articulation à charnière (22) reliant les parties adjacentes de transporteur (3, 4) sur un côté ouvrant de l'articulation à charnière (22).

3. Ensemble transporteur pliable (1) selon la revendication 1 ou la revendication 2, dans lequel la came comprend un disque à came (20) et un rouleau (19) au niveau d'une extrémité interne de la tige coulissante (16) peut être mis en prise avec le disque à came (20).

4. Ensemble transporteur pliable (1) selon la revendication 3, dans lequel le disque à came (20) s'étend radialement vers l'extérieur depuis l'axe de pivotement.

5. Ensemble transporteur pliable (1) selon la revendication 3 ou 4, dans lequel le disque à came (20) a une extrémité externe incurvée.

6. Ensemble transporteur pliable selon une quelconque revendication précédente, dans lequel la longueur de la tige coulissante (16) peut être ajustée.

7. Ensemble transporteur pliable selon la revendication 6, dans lequel la tige coulissante (16) comprend un tendeur (29) pour l'ajustement de la longueur.

8. Ensemble transporteur pliable (1) selon une quelconque revendication précédente, dans lequel le transporteur comporte trois parties (3, 4, 5) reliées de manière articulée, comprenant une section de tête (3), une section intermédiaire (4) et un empennage (5), la section intermédiaire (4) ayant la section de tête (3) et l'empennage (5) reliés de manière articulée à ses extrémités opposées.

9. Ensemble transporteur pliable (1) selon la revendication 8, dans lequel les sections de transporteur (3, 4, 5) sont pliables en une formation en zigzag.

10. Ensemble transporteur pliable (1) selon la revendication 8 ou la revendication 9, dans lequel la section intermédiaire (4) est reliée de manière articulée à l'empennage (5) pour se replier sur l'empennage (5) et la section de tête (3) est reliée de manière articulée à la section intermédiaire (4) pour se replier vers une face inférieure de la section intermédiaire (4).

11. Ensemble transporteur pliable (1) selon la revendication 10, dans lequel la section de tête (3) peut être pliée contre la face inférieure de la section intermédiaire (4) dans la position de stockage pliée.

12. Ensemble transporteur pliable (1) selon l'une quelconque des revendications 8 à 11, dans lequel un coulisseau pliable (40) est monté entre l'empennage (5) et la section intermédiaire (4) pour replier la section intermédiaire (4) sur l'empennage (5) et une liaison pliable (45) s'étend entre l'empennage (5) et la section intermédiaire (4) et la section de tête (3) pour replier la section de tête (3) sur la section intermédiaire (4) en réponse au fonctionnement du coulisseau pliable (40).

13. Ensemble transporteur pliable (1) selon la revendication 12, dans lequel la liaison pliable (45) comprend un support de montage (46) sur l'empennage (5) s'étendant vers l'extérieur à partir d'un axe de pivotement d'une articulation à charnière (35) reliant l'empennage (5) et la section intermédiaire (4) sur un côté ouvert de l'articulation à charnière (35), une tige de commande (47) ayant une extrémité interne (48) fixée de manière pivotante (49) au support de montage (46) et une extrémité externe (50) reliée de manière pivotante (51) à un premier bras de liaison (52) ayant une extrémité externe reliée à la tige de commande (47) et une extrémité interne reliée de manière pivotante (53) à la section intermédiaire (4) d'un côté de l'articulation à charnière (22) entre la section intermédiaire (4) et la section de tête (3), un second bras de liaison (55) ayant une extrémité externe reliée de manière pivotante au premier bras de liaison (52) entre les extrémités interne et externe du premier bras de liaison (52) et ayant une extrémité interne reliée de manière pivotante (58) à la section de tête (3) du transporteur de l'autre côté de l'articulation à charnière (22) entre la section intermédiaire (4) et la section de tête (3).
